# EUROPÄISCHE PATENTSCHRIFT

(11) **EP 1 086 007 B1**
(45) Veröffentlichungstag und Bekanntmachung des Hinweises auf die Patenterteilung: **19.02.2003**
(21) Anmeldenummer: 99931088.1
(22) Anmeldetag: 17.06.1999
(51) Int. Cl.: B60T 17/22, G01L 5/22

(54) **VORRICHTUNG ZUM PRÜFEN DES HYDRAULIKSYSTEMS VON KRAFTFAHRZEUGEN AUF DAS VORHANDENSEIN VON KLEIN- UND KLEINSTLECKAGEN**
DEVICE FOR DETECTING THE PRESENCE OF SMALL OR MINIMAL LEAKS IN THE HYDRAULIC SYSTEM OF VEHICLES
DISPOSITIF POUR VERIFIER SI LE SYSTEME HYDRAULIQUE D'AUTOMOBILES NE PRESENTE PAS DES FUITES LEGERES ET DES FUITES MINIMES

(30) Priorität: 17.06.1998 DE 29810807 U
(43) Veröffentlichungstag der Anmeldung: 28.03.2001
(73) Patentinhaber: Steinkrug GMBH & Co. KG, 85053 Ingolstadt (DE)
(72) Erfinder: SCHLEICHER, Franz, D-85053 Ingolstadt (DE); SCHOMMER, Wolfgang, D-66687 Wadern-Bardenbach (DE); IPFLING, Karl-Heinz, D-66740 Saarlouis (DE)
(74) Vertreter: Winter, Brandl, Fürniss, Hübner, Röss, Kaiser, Polte, Partnerschaft
(86) Internationale Anmeldenummer: EP9904197
(87) Internationale Veröffentlichungsnummer: WO99065747

(56) Entgegenhaltungen:
- EP-A- 0 392 188
- EP-A- 0 618 121
- DE-C- 3 525 864
- FR-A- 2 692 042

## Beschreibung

Die Erfindung betrifft eine Vorrichtung zum Prüfen des Hydraulikbremssystems von Fahrzeugen auf Vorhandensein von Klein- und Kleinstleckagen, gemäß Anspruch 1. Derartige Vorrichtungen sind bei Neufahrzeugen bzw. Bremssystemen erforderlich, bei denen nach der Befüllung des Brems-Hydrauliksystems geprüft bzw. bestätigt werden muss, dass keine Luft bzw. Undichtigkeiten im hydraulischen System der Bremse vorhanden sind.Dabei muss das Verhalten von Bremsleitungen unter Druck mit ausreichender Genauigkeit aufgezeichnet werden, was mit Vorrichtungen, die wie die aus der Schrift EP 618121 bekannte dazu dienen, ferngesteuert das Bremspedal zu betätigen, nicht bewerkstelligt werden kann.

Die Vorrichtung soll insbesondere gut dafür geeignet sein, ohne grössere Umbaumassnahmen im Fahrgastraum des Fahrzeugs eingesetzt zu werden. Ein besonders wichtiges Einsatzgebiet dieser Vorrichtung ist die Produktionslinie von Neufahrzeugen, so dass bei manuellem Wegfahren des Fahrzeugs am Ende der Linie die Bremse bereits geprüft ist und somit Unfälle im Werk vermieden werden. Bekannte Vorrichtungen, wie die aus dem Dokument EP 0392188 A1, haben einen sehr komplexen Aufbau mit vielen Bauteilen und erfordern ein hohes Mass an Sorgfalt beim Einsetzen in das Fahrzeug.Bei dieser Vorrichtung wird die Prüfkraft dadurch aufgebracht, daß über ein am hinteren Ende des Gehäuses positioniertes Stirnradgetriebe eine Spindel eines Kugelgewindetriebs in Drehbewegung versetzt wird. Auf der Spindel sitzt eine hohle Stange, die sich vom hinteren Ende bis zum vorderen Ende des Feuchtungsgehäuses erstreckt und sich dort als volle Stange 25 fortsetzt.

Aus dem Dokument DE-A-3525864 als nächstkommendem Stand der Technik ist eine Vorrichtung gemäss dem Oberbegriff des Patentanspruchs 1 bekannt. Dabei treibt ein Motor über eine Getriebestufe eine Zahnstange an. Die Zahnstange weist parallel zu ihrer Längsachse auf ihrem Umfang eine Verzahnung auf. Die Getriebestufe kann dabei zur axialer Bewegungseinleitung unterschiedlich ausgestaltet werden. Unter anderem ist eine Bauweise als Spindelhubgetriebe mit Kugelrollspindel vorgesehen, wobei die Getriebestufe auf der in Ausfahrrichtung vorderen Seite des Gehäuses angeordnet ist. Auch dieser Vorschlag hat einen komlizierten Aufbau. Das zwischengeschaltete Spindelhubgetriebe mit Kugelrollspindel bewirkt einen indirekten Krafteintrag auf die zu bewegende Kolbenstange.

Aufgabe der Erfindung ist es, eine Vorrichtung zum Prüfen des Hydraulikbremssystems von Kraftfahrzeugen auf das Vorhandensein von Klein- und Kleinstleckagen gemäß dem Oberbegriff des Patentanspruchs 1 derart weiterzubilden, daß bei vereinfachtem Aufbau eine genauere Messung möglich wird.

Diese Aufgabe wird durch die Merkmale des Patentanspruchs 1 gelöst.

Erfindungsgemäß ergibt sich eine wesentlich kompaktere Bauart, mit der Folge, daß die Prüfkraft wesentlich direkter eingeleitet werden kann. Dies wirkt sich nicht nur positiv auf die Meßgeschwindigkeit, sondern auch auf die Meßgenauigkeit aus.

In den Figuren ist eine Ausführungsform eines derartigen Gerätes dargestellt.

Es zeigt:
Figur 1 einen Längsschnitt des Geräts;

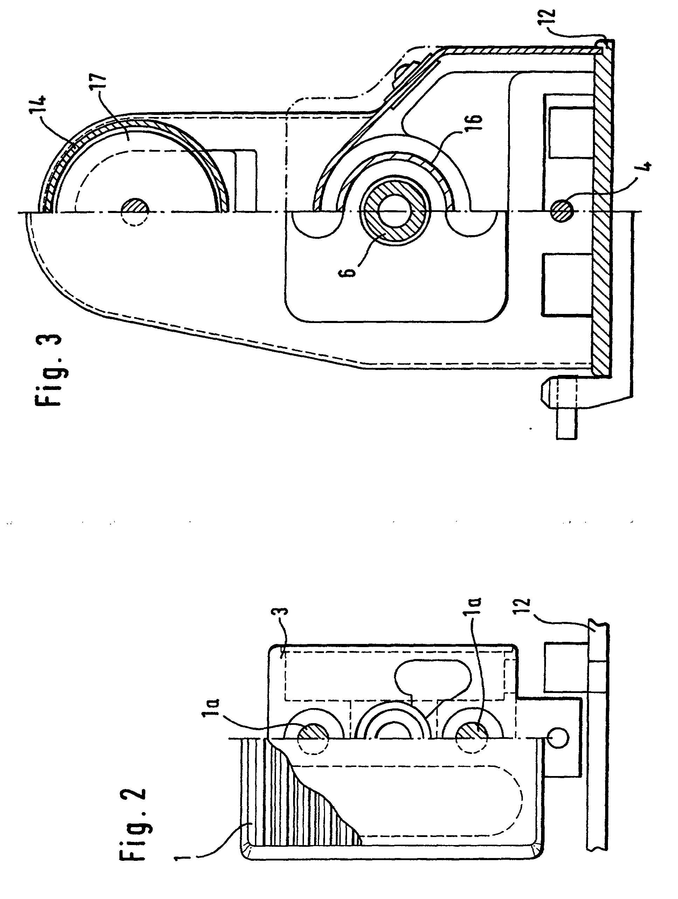

Figur 2 in vergrössertem Maßstab die Ansicht "A" mit zum Teil weggebrochenem Pedalblatt;
Figur 3 den Schnitt C-C in Figur 1 (im Halbschnitt); und

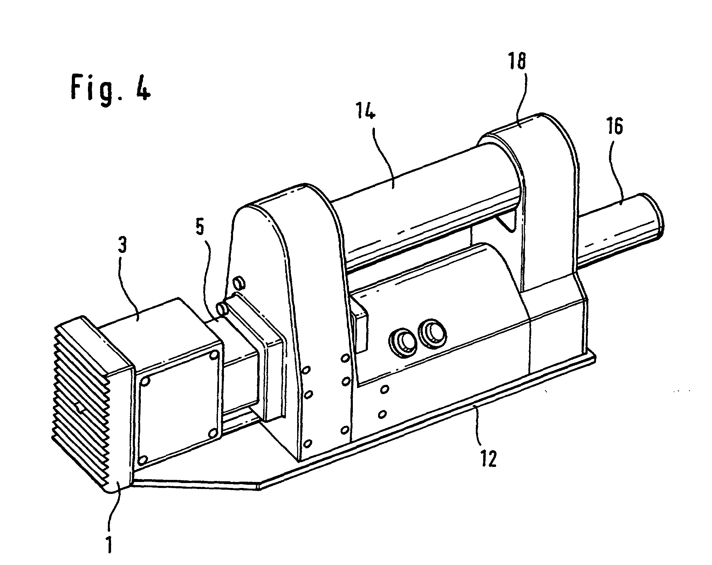

Figur 4 eine perspektivische Ansicht des Geräts.

Wie aus den Figuren ersichtlich hat die Vorrichtung bzw. das Bremsprüfgerät eine nichtdrehende, über eine rotierbare Mutter (6.1) linear verschiebbare Spindel (6), die über den Kopf (1) auf das Bremspedal trifft und den integrierten Druckaufnehmer (2), dessen vorzugsweise elektronischer. Verstärker im Meßkopfgehäuse (3) platziert ist, kraftbeaufschlagt, bis bei weiterem Verfahren die voreingestellte Haltekraft erreicht ist.

Die Spindel (6) trägt über ihr vorderes Ende einen Meßkopf 3, der mittels einer Führungsstange verdrehsicher längsverschiebbar ist. Im Meßkopf 3 ist ein Kraftsensor 2 aufgenommen. Eine Zahnplatte 1 ist reibungsarm in axialer Richtung geführt im Meßkopf 3 aufgenommen, wobei vorzugsweise Kugelbüchsen 1c Verwendung finden, die mit mindestens 2 Führungsbolzen 1a zusammenwirken. Auf der der Zahnplatte 1 abgewandten Seite sind die Führungsbolzen 1a mit einer Druckplatte 1b verschraubt, an der sich eine Druckfeder 1d abstützt, die über eine weitere Stützscheibe le gehäusefest abgestützt ist.

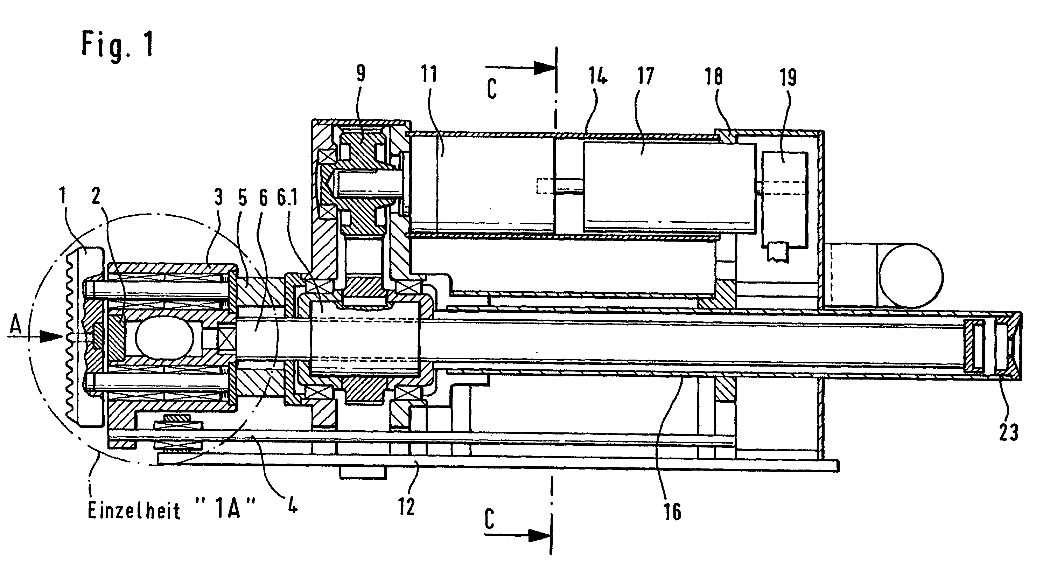

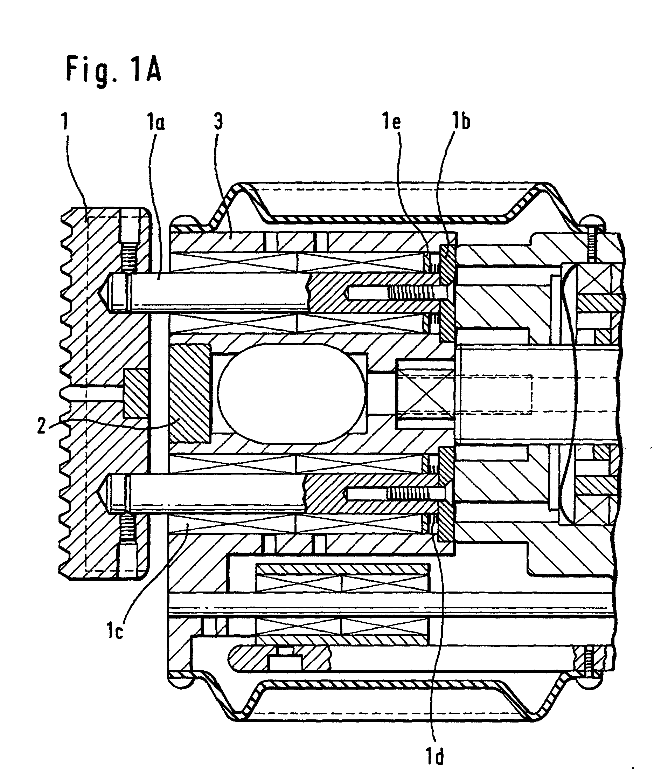

In der in Figur 1a gezeigten zurückgezogenen Stellung der Spindel sind die Druckplatten 1b gegen einen Anschlag 5 gefahren, so dass die Zahnplatte 1 vom Kraftsensor 2 abgehoben ist.

Mit anderen Worten, die Zahnplatte 1 stützt sich abgefedert am Meßkopfgehäuse ab, so dass ein im Meßkopf aufgenommener Kraftsensor im unbelasteten Zustand keiner äußeren Kraft unterliegt. Erst bei Verschiebung der Spindel 6, hebt der Meßkopf 3 von dem Anschlag 5 ab, so dass die Federn 1d die Zahnplatte 1 in Kontakt mit dem Sensor 2 drücken

Der Druckruckaufnehmer (2) ist vorzugsweise mit Verstärkerplatine im Meßkopfgehäuse (3) integriert.

Nach Einreichen einer Prüfkraft - nach erfolger Stabilisierung des Bremssystems - wird diese auf dem Prüfwert geregelt gehalten, wobei bei Kraftabfall auf vorgegebene Kraft nachgeregelt wird, und der sich dadurch ergenende Weg der Spindel gemessen und einer Auswertung zugeführt wird.

Damit indizieren die in die übergeordnete Steuerung eingehenden Signale des Druckaufnehmers (2) für Kraftmessung sowie Signalinputs eines Encoders (19) für die Position bzw. den Verfahrweg der Spindel mit variabler Zeitabhängigkeit vorhandene Leckage, indem die voreingestellte Prüfkraft geregelt wird und bei Druckabfall eine Nachführung des Spindelwegs zum Halten der eingeregelten Prüfkraft stattfindet.

Der Kraftverlauf zwischen Bremspedal-Meßkopf (3) über Druckaufnehmer (2), Spindel (6), ein Abstützschutzrohr (16) mit Kegelpfanne (23) und einem nicht näher gezeigten Kugelbolzen einer zumindest zweidimensional, vorzugsweise "3D-gefederten" Adapterführungsschiene mit Fixierung liegt exakt auf einer Linie, so dass das Meßsystem querkraftfrei belastet wird.

Eine Verdrehsicherung in Form einer Führungsstange (4) schließt die Rotation der Spindel (6) aus.

Die Anordnung ist - wie sich am besten aus der Detailansicht gemäß Figur 1a ergibt - derart getroffen, dass im eingefahrenen Zustand der Spindel (6) der Druckaufnehmer (2) mechanisch nicht beaufschlagt wird. Zu diesem Zweck stützt sich die Zahnplatte (1) gefedert über die Führungsbolzen von (3) auf Druckstücke (5); diese Maßnahme schützt den Druckaufnehmer (2) vor mechanischen Beschädigungen beispielsweise beim Herabfallen oder sonstigen äußeren Stößen auf die Zahnplatte (1).

Die Antriebseinheit aus Motor (17) und Getriebe (11) ist mit einem Schutzrohr (14) umgeben, das gleichzeitig als Griffstück dient. Das Schutzrohr (14) stabilisiert die Getriebestufe (9) mit dem motorseits gelagerten Gehäuse (18), wodurch in Verbindung mit dem Spindelschutzrohr (16) und einer Grundplatte (12) ein mindestens zweifach statisch überbestimmten Rahmen gebildet wird.

Die Datenübertragung vom Meßkopf zu einem Interface in Gehäuse (18) erfolgt entweder drahtlos oder hardwaremäßig in einem Kabelschlepp.

Vorzugsweise wird das Gerät über eine "2D- oder 3D-gefederte Adapterführungsschiene mit Fixierung" an den Fahrzeugsitzschienen positioniert, in die die Reaktionskräfte abgeleitet werden.

Die parallel in eine übergeordnete Steuerung eingehenden Signale des Druckaufnehmers (2) für die Kraftmessung sowie die eines Encoders (19) für die Position bzw. einen Differenzverfahrweg der Spindel (6) vorzugsweise mit variabler Zeitabhängigkeit und automatischer Nachregelung der von der Spindel aufgebrachten Kraft durch Anpassung des von der Spindel zurückgelegten Ausfahrweges bei Druckabfall indizieren vorhandene Leckagen (2-3-Tropfen-Theorie).

Die Geschindigkeitsregulierung der Spindel (6) über Kraftanstiegsmessung bewirkt eine wesentlich erhöhte Wiederholgenauigkeit dieses hydraulikfreien Prüfvorgangs. Das Gerät kann zuverlässig im Beinraum des Fahrzeuglenkers eingesetzt werden - auch zur Übertragung der der jeweiligen Bremspedalkraft äquivalenten Gegenkraft auf die PKW-Karosserie. Zu diesem Zweck wird das Bremsprüfgerät auf einen besonders gestalteten Halterahmen aufgesetzt, der an den Führungsschienen des Fahrzeusitzes befestigt wird. Die Anordnung ist so getroffen, dass das Prüfgerät mit mindestens zwei (2D-gefedert), vorzugsweise drei Freiheitsgraden beweglich bzw. abgefedert positioniert ist, damit die Bremskraft über die Spindel (6) querkraftfrei auf das Pedal übertragen werden kann, wenn sich letzteres bei der Bremsprüfung verschwenkt und seine Lage bezüglich der raumfesten Fahrzeugsitzschienen verändert. Ein Freiheitsgrad verläuft parallel zu den Sitzschienen. Ein zweiter Rotationsfreiheitsgrad ist um eine horizontale Achse gegeben, die vorzugsweise parallel zur Achse des Bremspedals verläuft. Ein weiterer rotatorischer Freiheitsgrad ist um eine vertikale Achse gegeben, wodurch Ausrichtungsfehler ausgeglichen werden können. Mit diesem Aufbau lassen sich Messfehler zuverlässig ausschliessen.

Bei dem Bremsprüfgerät werden somit die Wege des Bremspedals bei vorgegebener Kraft gemessen und nach Werksvorgabe ausgewertet. Es handelt sich um ein leicht und einfach zu bedienendes Gerät, bei dem der Prüfungsablauf vollautomatisch durchgeführt werden kann. Sobald die vorgegebene Bremskraft erreicht ist, erfolgt eine Ist-Wegmessung des Bremspedals, wobei über das Nachgeben des Bremspedals, das mit der Bewegung des Hydraulikkolbens korreliert, eine Leckage-Erkennung möglich ist, indem über eine vorgegebene Zeiteinheit auf den Hydraulikkolben eine konstante Kraft einwirkt.

Im folgenden werden die einzelnen Schritte bei der Bedienung der Vorrichtung erläutert:
- Einlegen des Prüfgerätes in das Fahrzeug
- Starttaste durch Werker
- Setzhübe zur Konditionierung des Bremssystemes intelligent ausführen
- Berstdruck aufbringen
- Prüfhub ausführen
- Kontinuierliche Aufnahme der Messwerte
- Lecktest durchführen
- Grundstellung
- Ausgabe der Ergebnisse
- Entnahme aus dem Fahrzeug

In der Praxis hat sich gezeigt, daß bedingt durch nicht 100-prozentig vorkonditionierte Bremsen fälschlicherweise Fehler erkannt wurden. Die Kosten durch "falsche Fehler" sind nicht tragbar. Durch Einführung zusätzlicher Konditionierhübe kann diese Fehlerrate ausgeschlossen werden.

Diese zusätzlichen Hübe bedeuten im wesentlichen Leistung. Um diese Leistung sicherzustellen, wird ein Servoantrieb mit intelligenter Servosteuerung eingesetzt. Das Ergebnis ist eine hohe Geschwindigkeit verbunden mit einer hohen Pedalkraft. Durch die eingebaute Intelligenz erfolgt die Regelung der Geschwindigkeit kontinuierlich kraftabhängig. D.h., dass der Motor bei geringen Pedalkräften oder im Freilauf) sehr schnell läuft und erst im Ende des Verfahrweges bei hohen Kräften langsamer wird. Dies führt zu einer Zeitoptimierten Bewegung des Pedalbelasters. Die zusätzliche Intelligenz der Software erkennt eine bereits vorkonditionierte Bremse. Die Anzahl der Setzhübe ist nicht mehr konstant, sondern wird automatisch über die Software gesteuert. Ein Fahrzeug kann also bereits nach zwei Setzhübern geprüft werden, wobei ein anderes vielleicht vier Setzhübe benötigt. Diese Intelligenz spart Zeit und Energie.

Die Forderung nach zeitgemäßer Messtechnik wurde erfüllt durch den Einsatz von
- Inkrementaler Weggeber für die Längenmessung
- Kraftmessdose für die Pedalkraft

Der Weggeber sitzt direkt am Motorflansch und liefert störsichere Digitalimpulse mit einer Messgenauigkeit von 0,01 mm. Die Kraftmessdose liefert eine Genauigkeit von 1N. Um eine Beschädigung der Kraftmessdose zu verhindern, wird die Kraftmessdose in Grundstellung freigefahren. Selbst ein herunterfallen oder ein Hammerschlag kann die Kraftmessdose nicht beschädigen. Die Zuverlässigkeit und Verfügbarkeit ist gewährleistet.

Durch den einfachen Aufbau ist das Gerät wartungsfreundlich. Aufgrund der Konstruktion des Gerätes und der Sitzschiene ergeben sich keine Querkräfte mehr im Handset. Die Kraft wird direkt über die Welle, deren Ende der Lagerpunkt des Gerätes ist eingeleitet. Zusätzlich ist die Sitzschiene sowohl horizontal als auch vertikal federnd gelagert. Durch diese Maßnahmen wird der Verschleiß des Gerätes deutlich vermindert.

Die Software ist eine Windows NT Anwendung. Sie steuert den kompletten Prüfablauf. Alle gesammelten Erfahrungen haben zu einem optimierten Ablauf geführt. Standardisierte Elemente erlauben eine komfortable leichte Bedienung. Durch die Bearbeitung der Windows-Oberfläche ergibt sich eine hohe Akzeptanz bei den Bedienern. Wesentliche Merkmale sind:
- Standardisierte Windows NT Anwendung
- Grafische Oberfläche
- Leichte Bedienung
- Permanente Messwertaufzeichnung während des Prüfablaufes mit grafischer Darstellung des Prüfablaufes
- Intelligente Ablaufsteuerung
- Diagnose
- Komfortable Druckausgabe
- Verschiedene Lecktestmöglichkeiten
- Schnittstelle zur ProPedal Auswertesoftware

Der Lecktest kann auf drei verschiedene Arten ausgeführt werden.
- Messung des Kraftabfalles
- Messung des Kraftabfalles und messen des Weges, der benötigt wird um die Kraft nach der Prüfzeit wieder auf Nennkraft zu bringen.
- Kontinuierliche Regelung der Kraft auf Nennkraft und den benötigten Weg dafür aufzeichnen.

Zusätzlich können die Messwerte über eine Lupenfunktion in der grafischen Darstellung der Messkurve vergrößert dargestellt werden. Ein Ausdruck dieser Kurve, bewertet durch einen Experten, kann in Grenzsituationen (z.B. nur geringste Abweichungen von Grenzwerten) zusätzliche Nacharbeit verhindert.

Die wesentlichen Vorteile der Erfindung können wie folgt zusammengafasst werden
1. Geringeres Gewicht (nur noch 4 kg)
2. Kürzere Bauform bei gleichzeitig längerem Hub (200 mm Standardhublänge, 390 mm Gesamtbaulänge)
3. Kraftmessung bis 130 kg möglich
4. Gleiches Gerät universell Rechts- Linkslenkerfahrzeuge
5. Beidseitig angebrachte Start- und Stoptaster
6. Linearer Kraftverlauf im Gerät während der Prüfung
7. Höhere Meßgenauigkeit durch Einsatz von zeitgemäßer Meßtechnik (inkrementale Weggeber und elektronische Kraftmeßdose)
8. Höhere Auflösung während des Lecktestes durch konstantes Nachregeln der Kraft (siehe Prüfvorschriften der Autoindustrie)
9. Höhere Prüfgeschwindigkeit durch schnelleren Antrieb
10. Automatische Geschwindigkeitsregulierung über Kraftanstiegsmessung
11. Verbesserung der Sitzschiene durch horizontal und vertikal federnde Lagerung zum Ausgleich auftretender Querund Biegekräfte
12. Servicefreundlichkeit (z. B. alle Kabel in und an dem Gerät sind steckbar ausgeführt)
13. Neue verbesserte Software
14. Verschiedene "Lecktest-Möglichkeiten" über interne Software
15. Standard-PC zum Steuern und Auswerten (z. B. Siemens-Nixdorf)
16. Je Elektroschrank können bis zu 4 gleichzeitig zu betreibende Handsets angeschlossen werden (z. B. Kalibrieren eines Geräts während die anderen Geräte im Einsatz sind).
17. Windows-NT-32 Bit-Software
18. Komfortables Parameter- und Diagnoseprogramm
19. Datenauswertung und Archivierung über Prodama-Software
20. Statistische Auswertung möglich, auch während dem laufendem Betrieb der Geräte
21. Kurvendiagramme möglich
22. Anschlußmöglichkeit für Funkscanner
23. Erweiterbare Statistik- oder Auswertsoftware nach Kundenwunsch

Die Vorzüge des Geräts werden optimal genutzt, wenn folgender Funktionsablauf eingehalten wird:
1. Der Bediener (die Bedienerin) legt zuerst die Adapterschiene (Sitzschiene) in die Sitzbefestigungsschienen des Fahrzeuges ein.
2. In diese Adapterschiene wird das eigentliche Prüfgerät eingelegt.
3. Danach wird nur noch der Startknopf betätigt.
4. Der weitere Prüfablauf erfolgt automatisch.
5. Das Gerät beginnt zuerst mit den sogenannten Setzhüben (1-3 Hübe). Diese Hübe werden zum Anlegen der Bremsbeläge und zum Setzen des ganzen Bremssystems benötigt. Die Hubanzahl kann fest eingestellt werden oder auch automatisch nach Erreichen einer vorgegebenen Gegenkraft beendet werden (Zeiteinsparung).
6. Danach beginnt der eigentliche Prüfhub (Meßhub). Hierbei fährt der Meßkopf des Geräts bis zum Erreichen des Pedals vor. Dieser sogenannte "erste Weg" wird hierbei gemessen und mit hinterlegten Toleranzwerten verglichen.
7. Diese Messung überwacht den mechanischen Einbau des Bremspedals und liefert die Grundwerte für die weiter Messungen.
8. Vom Erreichen des Pedals aus wird wiederum der Weg bis zum Erreichen der vorgegebenen Prüfkraft gemessen. Auch dieser Wert wird das Bremssystem auf Befüllung bzw. Lufteinschlüsse geprüft.
9. Nach diesen Messungen erfolgt eine sogenannte Stabilisierungszeit (Beruhigungszeit). Während dieser Zeit erfolgt nur eine Kraftnachregelung um die vorgegebene Prüfkraft konstant zu halten.
10. Nach Ablauf der Stabilisierungszeit wird das Meßsystem nochmals genullt. Darauf erfolgt der sogenannte "Leckage-Test". Hierbei wird während einer festgelegten Zeit ein Nachgeben der Bremse über Wegmessung geprüft. Sinn dieser Prüfung ist das Feststellen von Klein- und Kleinst-Leckagen im Bremssystem. Dieser "Lecktest" kann in drei verschiedenen Versionen je nach Kundenwunsch und/oder Fahrzeug durchgeführt werden.
11. Nach Ablauf dieser Prüfung (IO-NIO und/oder der klp. Meßwerte).
12. Der Meßkopf des Geräts fährt nach Ablauf der Messung automatisch wieder in die Grundstellung zurück.
13. Der Bediener (die Bedienerin) entnimmt das Gerät sowie die Adapterschiene und geht zum nächsten Fahrzeug.

Während der Messung werden alle Daten auf dem Bildschirm angezeigt. Die Anzeige bleibt bis zum nächsten Anstarten des Gerätes erhalten.

Bei einem NIO-Fahrzeug wird auf "Luft in der Bremse" oder "Leckage" entschieden, so daß die Reparaturabteilung bereits eine gezielte Information bekommt. Dies hilft natürlich, den Zeitraum der Reparatur stark zu senken, und ist somit eine gezielte Kosteneinsparung.

Alle Prüfdaten werden, bis die Rechnerkapazität erreicht ist, auf der Festplatte archiviert. Als Option ist ein Weiterleiten der Daten an übergeordnete Leitrechner selbstverständlich möglich. (z. B. Modbus plus, TCP/IP, Ethernet, H1-Bus usw.)

Ein Statistikprogramm ist ebenfalls in der Software integriert.

Bei verschiedenen Bremssystemen (Fahrzeugtypen), bei denen mit verschiedenen Toleranzparametern gearbeitet werden muß, besteht als Option die Möglichkeit, diese über Funkscanner, Barcode oder Leitrechner direkt einzulesen. Hierbei entfällt das manuelle Anwählen der eventuell erforderlichen Prüfprogramme.

Durch eine erweiterte Software (Option) und das Verknüpfen mit vorgeschalteten Bremsfüllanlagen kann das Prüfgerät auch zur vorbeugenden Instandhaltung, frühzeitiger Fehlererkennung und somit zur Kosten- und Zeiteinsparung benutzt werden.

## Patentansprüche

1. Vorrichtung zum Prüfen des Hydraulikbremssystems von Kraftfahrzeugen auf das Vorhandensein von Klein- und Kleinstleckagen, mit einem Gehäuse (12, 11, 18), an dem unter Zwischenschaltung einer Getriebestufe (9) achsversetzt ein Antriebsmotor (17) für ein aus dem Gehäuse ausfahrbares Betätigungsglied (6) zur Aufbringung der Prüfkraft sitzt, und die Getriebestufe (9) auf der in Ausfahrrichtung vorderen Seite des Gehäuses (11, 12, 18) liegt, **dadurch gekennzeichnet, daß** die Getriebestufe (9) in Getriebeeingriff mit einer axialfesten drehbaren Mutter (6.1) steht, über die das als drehfeste aber axial bewegliche Spindel (6) ausgebildete Betätigungsglied antreibbar ist, welches an seinem auskragenden Stirnende einen Meßkopf (3) trägt, wobei die Spindel (6) konzentrisch innerhalb der Mutter (6.1) angeordnet ist.

2. Vorrichtung nach Anspruch 1, **dadurch gekennzeichnet, daß** der Messkopf (3) eine abgefederte Zahnplatte (1) trägt.

3. Vorrichtung nach Anspruch 1 oder 2, **dadurch gekennzeichnet, daß** im Meßkopfgehäuse (3) ein Kraftsensor (2) mit Verstärkerplatine integriert ist.

4. Vorrichtung nach einem der Ansprüche 1 bis 3, **dadurch gekennzeichnet, daß** eine Regelung vorgesehen ist, mit der nach Einreichen einer vorbestimmten Prüf-Haltekraft bei auftretendem Druckabfall im Hydraulikbremssystem diese durch Nachfahren des Betätigungsglieds (6) nachregelbar ist.

5. Vorrichtung nach Anspruch 4, **dadurch gekennzeichnet, daß** eine Steuereinrichtung vorgesehen ist, mit der die Signale des Kraftsensors (2) für Kraftmessung sowie Ausgangssignale eines Encoders (19) für die Position bzw. den Verfahrweg der Spindel (6) parallel verarbeitbar sind.

6. Vorrichtung nach einem der Ansprüche 1 bis 5, **dadurch gekennzeichnet, daß** der Kraftsensor (2), die Achse der Spindel (6) und ein diese auf der dem Messkopf (3) abgewandten Seite des Gehäuses (11, 12, 18) umgebendes Schutzrohr (16) mit endseitig angeordneter Kegelpfanne (23) so exakt wie möglich auf einer Linie liegen.

7. Vorrichtung nach Anspruch 6, **dadurch gekennzeichnet, daß** das Gehäuse (11, 12, 18) zur querkraftfreien Belastung des Messsystems auf einer Adapterführungsschiene montierbar ist, die einen mit der Kegelpfanne (23) zusammenwirkenden Kugelbolzen trägt und vorzugsweise mit zumindest zwei gefederten Freiheitsgraden an Stützschienen im Fahrgastraum eines Kraftfahrzeugs abgestützt ist.

8. Vorrichtung nach Anspruch 7, **dadurch gekennzeichnet, daß** ein Freiheitsgrad parallel zu den Stützschienen verläuft.

9. Vorrichtung nach Anspruch 7 oder 8, **dadurch gekennzeichnet, daß** ein weiterer Freiheitsgrad um eine horizontale Achse gegeben ist, die parallel zur Drehachse eines Bremspedals verläuft.

10. Vorrichtung nach einem der Ansprüche 7 bis 9, **dadurch gekennzeichnet, daß** ein weiterer Freiheitsgrad um eine vertikale Achse gegeben ist.

11. Vorrichtung nach einem der Ansprüche 2 bis 10, **dadurch gekennzeichnet, daß** zum Schutz des Kraftsensors (2) vor mechanischen Beschädigungen die Abstützung der Zahnptatte (1) derart erfolgt, dass sie im eingefahrenen Zustand der Spindel (6) vom Kraftsensor (2) abgehoben und in dieser Position starr fixiert ist, indem sie sich über Führungsbolzen (1a) auf gehäusefesten Druckstücken (5) abstützt.

12. Vorrichtung nach einem der Ansprüche 1 bis 8, **dadurch gekennzeichnet, daß** zur Verwendung des Prüfgeräts für Rechts- und Linkslenkerfahrzeuge Bedienungsknöpfe auf beiden Seiten des Gehäuses (11, 12, 18) angeordnet sind.

13. Vorrichtung nach einem der Ansprüche 1 bis 12, **dadurch gekennzeichnet, daß** eine aus Antriebsmotor (17) und Zwischengetriebe (11) bestehende Einheit mit einem Schutzrohr (14) umgeben ist, das gleichzeitig als Griffstück dient.

14. Vorrichtung nach Anspruch 13, **dadurch gekennzeichnet, daß** das Schutzrohr (14) die Getriebestufe (9) mit einem der Getriebestufe (9) abgewandten Gehäuseabschnitt (18) stabilisiert und in Verbindung mit dem Spindelschutzrohr (16) und einer Grundplatte (12) des Gehäuses einen mindestens zweifach statisch überbestimmten Rahmen bildet.

15. Vorrichtung nach einem der Ansprüche 1 bis 14, **dadurch gekennzeichnet, daß** eine Datenübertragung von Meßkopf (1, 3) zu einem Interface in einem Gehäuseabschnitt (18)über ein Kabelschlepp erfolgt.

16. Vorrichtung nach einem der Ansprüche 1 bis 14, **dadurch gekennzeichnet, daß** eine Datenübertragung von Meßkopf (1, 3) zu einem Interface in einem Gehäuseabschnitt (18)drahtlos erfolgt.

17. Vorrichtung nach einem der Ansprüche 7 bis 16, **dadurch gekennzeich net, daß** die Vorrichtung geeignet ist sich an den Fahrzeugsitzschienen abzustützen.

## Claims

1. A device for testing the hydraulic brake system. of motor vehicles for the presence of small leaks and microleaks, comprising a housing (12, 11, 18), on which is located in axially offset manner a drive motor (17) for an actuating member (6) which may be advanced from the housing for application of the test force, a gear stage (9) being interposed between the housing (12, 1.1, 18) and drive motor (i.7), and the gear stage (9) is located on the side of the housing (11, 12, 18) at the front in the direction of advance, **characterized in that** the gear stage (9) is in geared engagement with an axially fixed rotatable nut (6.1), via which the actuating member. constructed as a non-rotatable but axially movable spindle (6) may be driven, which actuating member bears a measuring head (3) on its protruding front end, the spindle (6) being arranged concentrically within the nut (6.1).

2. A device according to claim 1, **characterised in that** the measuring head (3) bears a spring-mounted toothed rack (1).

3. A device according to claim 1 or 2, **characterised in that** a force sensor (2) with amplifier board is incorporated in the measuring head housing (3).

4. A device according to one of claims t to 3, **characterised in that** an adjustment means is provided, with which, after submission of a predetermined test holding force, said holding force may be re-established in the event of a pressure drop in the hydraulic brake system by further advancing the actuating member (6).

5. A device according to claim 4, **characterised in that** a control means is provided, with which the signals from the force sensor (2) for force measurement and output signals from an encoder (19) for the position or travel of the spindle (6) may be processed in parallel.

6. A device according to one of claims 1 to 5, **characterised in that** the force sensor (2), the axis of the spindle (6) and a protective tube (16), which encloses said spindle (6) on the side of the housing (11, 12, 18) remote from the measuring head (3) and has a conical socket (23) arranged at the end, are aligned as exactly as possible.

7. A device according to claim 6, **characterised in that** the housing (11, 12, 19), in order to permit loading of the measurement system without transverse forces, may be mounted on an adapter guide rail, which rail bears ball pins which interact with the conical socket (23) and is preferably supported with at least two sprung degrees of freedom on supporting rails in the passenger compartment of a motor vehicle.

8. A device according to claim 7, **characterised in that** one degree of freedom extends parallel to the supporting rails.

9. A device according to claim 7 or 8, **characterised in that** another degree of freedom is provided about a horizontal axis which extends parallel to the axis of rotation of a brake pedal.

10. A device according to one of claims 7 to 9, **characterised in that** another degree of freedom is provided about a vertical axis.

11. A device according to one of claims 2 to 10, **characterised in that,** in order to protect_ the force sensor (2) from mechanical damage, the toothed rack (1) is supported in such a manner that, in the retracted position of the spindle (6), it is lifted clear of the force sensor (2) and is rigidly fixed in said position by resting via guide pins (1a) on pressure pads (5) attached to the housing.

12. A device according to one of claims 1 to 8, **characterised in that** operating buttons are arranged on both sides of the housing (11, 12, 18) to allow use of the test apparatus for right-hand and lefthand drive vehicles.

13. A device according to one of claims 1 to 12, **characterised in that** a unit consisting of drive motor (17) and intermediate gears (11) is enclosed in a protective tube (14) which simultaneously functions as a handle.

14. A device according to claim 13, **characterised in that** the protective tube (14) stabilises the gear stage (9) with a housing portion (19) remote from the gear stage (9) and, in conjunction with the spindle protection tube (16) and a base plate (12) of the housing, forms an at least doubly statically redundant frame.

15. A device according to one of claims 1 to 14, **characterised in that** data is transferred from the measuring head (1, 3) to an interface in a housing portion (18) via a cable carrier.

16. A device according to one of claims 1 to 14, **characterised in that** data is transferred by wireless means from the measuring head (1, 3) to an interface in a housing portion (18).

17. A device according to one of claims 7 to 16, **characterised in that** the device is suitable for being supported on the vehicle seat rails.

## Revendications

1. Dispositif pour vérifier si le système de freinage hydraulique d'automobiles ne présente pas des fuites légères ou des fuites minimes, avec un boîtier (12, 11, 18) sur lequel se trouve, décalé axialement et avec intercalage d'une cellule d'engrenage (9), un moteur de commande (17) pour un élément d'actionnement (6) capable d'être déplacé hors du boîtier pour appliquer la force d'essai, et la cellule d'engrenage (9) se trouve au côté avant du boîtier (11, 12, 18) dans le sens de déplacement, **caractérisé en ce que** la cellule d'engrenage (9) se trouve en engrènement avec un écrou rotatif (6.1) et inamovible axialement, au moyen duquel l'élément d'actionnement ayant la forme d'une broche (6) immobile en rotation mais amovible axialement peut être entraîné, ledit élément d'actionnement portant sur sa face en saillie une tête de mesure (3), la broche (6) étant disposée de façon concentrique à l'intérieur de l'écrou (6.1).

2. Dispositif selon la revendication 1, **caractérisé en ce que** la tête de mesure (3) porte une plaque-crémaillère (1) montée sur ressorts.

3. Dispositif selon la revendication 1 ou 2, **caractérisé en ce qu**'un capteur d'effort (2) avec une platine amplificatrice est intégré dans le boîtier de la tête de mesure (3).

4. Dispositif selon l'une des revendications 1 à 3, **caractérisé en ce qu**'un réglage est prévu permettant, si une chute de pression se manifeste après une pression d'essai déterminée ait été atteinte, de rajuster ladite pression d'essai par un déplacement supplémentaire de l'élément d'actionnement (6).

5. Dispositif selon la revendication 4, **caractérisé en ce que** dès moyens de commande sont prévus, permettant de traiter parallèlement les signaux du capteur d'effort (2) pour mesurer des efforts ainsi que les signaux de sortie d'un encodeur (19) pour la position ou le déplacement de la broche (6).

6. Dispositif selon l'une des revendications 1 à 5, **caractérisé en ce que** le capteur d'effort (2), l'axe de la broche (6) et un tube protecteur (16) équipé d'une rondelle à rotule concave (23), entourant la broche à l'extrémité de celle-ci au côté du boîtier (11, 12, 18) à l'opposé de la tête de mesure, se trouvent en alignement aussi parfait que possible.

7. Dispositif selon la revendication 6, **caractérisé en ce que** le boîtier (11, 12, 18) peut être monté sur une glissière de guidage d'ajustage, afin de permettre une sollicitation du système d'essai libre de toute force latérale, qui porte un boulon à rotule concourant avec la rondelle à rotule concave (23) et, de préférence, est supportée à l'intérieur d'un véhicule par des rails de support avec au moins deux degrés de liberté élastiques.

8. Dispositif selon la revendication 7, **caractérisé en ce qu'**un degré de liberté s'étend parallèlement aux rails de support.

9. Dispositif selon la revendication 7 ou 8, **caractérisé en ce qu**'un autre degré de liberté est prévu autour de l'axe horizontal, qui s'étend parallèlement à l'axe de rotation d'une pédale du frein.

10. Dispositif selon l'une des revendications 7 à 9, **caractérisé en ce qu**'un autre degré de liberté est prévu autour d'un axe vertical.

11. Dispositif selon l'une des revendications 2 à 10, **caractérisé en ce que,** pour protéger le capteur d'effort (2) contre des dommages mécaniques, le support de la plaque-crémaillère (1) est prévu de sorte à ce qu'en position rentrée de la broche (6) la plaque-crémaillère (1) est décollée du capteur d'effort (2) et fixée rigidement en cette position, et ceci en s'appuyant sur des pièces d'appui (5) fixées au boîtier au moyen de broches guides (1a).

12. Dispositif selon l'une des revendications 1 à 8, **caractérisé en ce que** des boutons de commande sont disposés sur les deux côtés du boîtier (11, 12, 18) pour l'utilisation de l'appareil de contrôle pour des véhicules avec direction à droite et à gauche.

13. Dispositif selon l'une des revendications 1 à 12, **caractérisé en ce qu**'une unité se composant du moteur de commande (17) et de la transmission intermédiaire (11) est entourée d'un tube protecteur (14) qui sert en même temps de poignée.

14. Dispositif selon la revendication 13, **caractérisé en ce que** le tube protecteur (14) stabilise la cellule d'engrenage (9) à l'aide d'une section du boîtier (18) à l'opposé de la cellule d'engrenage et forme un cadre au moins doublement surdéterminé statiquement en combinaison avec le tube protecteur de la broche (16) et une plaque de base (12) du boîtier.

15. Dispositif selon l'une des revendications 1 à 14, **caractérisé en ce qu'**une transmission des données de la tête de mesure (1, 3) vers une interface dans une section du boîtier (18) a lieu à travers une chaîne à cable.

16. Dispositif selon l'une des revendications 1 à 14, **caractérisé en ce qu**'une transmission de données de la tête de mesure (1, 3) vers une interface dans une section du boîtier (18) a lieu sans fil.

17. Dispositif selon l'une des revendications 7 à 16, **caractérisé en ce que** le dispositif est approprié pour s'appuyer sur les rails des sièges du véhicule.
